Europäisches Patentamt

(19) European Patent Office

Office européen des brevets

(11) Numéro de publication: **0 191 786**
**B1**

(12) **FASCICULE DE BREVET EUROPEEN**

(45) Date de publication du fascicule du brevet: **12.09.90**

(21) Numéro de dépôt: **85903668.3**

(22) Date de dépôt: **24.07.85**

(86) Numéro de dépôt international:
**PCT/FR85/00203**

(87) Numéro de publication internationale:
**WO 86/00822 13.02.86 Gazette 86/04**

(51) Int. Cl.⁵: **B 01 D 29/07,** B 01 D 29/50,
D 06 F 43/08

(54) CARTOUCHE DE FILTRATION A SURFACE EXTERNE EN NIDS D'ABEILLES ET PROCEDE DE REALISATION.

(30) Priorité: **25.07.84 FR 8411801**

(43) Date de publication de la demande:
**27.08.86 Bulletin 86/35**

(45) Mention de la délivrance du brevet:
**12.09.90 Bulletin 90/37**

(84) Etats contractants désignés:
**AT BE CH DE GB IT LI**

(56) Documents cités:
**WO-A-84/00014
DE-B-1 163 293
DE-B-1 218 407
GB-A- 267 485
US-A-3 371 790**

(73) Titulaire: **A.R.E. S.A.R.L.
Route de Champlan
F-91300 Massey (FR)**

(72) Inventeur: **LHUILLIER, Robert
37, allée Hector Berlioz
F-91310 Longpont-sur-Orge (FR)**
Inventeur: **SELESNICK, Michael
258 Durham Road
Nextown, PA 18940 (US)**
Inventeur: **VIEVILLE, Jean
65, avenue Pierre Vermier
F-91160 Antony (FR)**
Inventeur: **WOLFE, John
F-27310 Flancourt Catelon
F-27310 Flancourt Catelon (FR)**

(74) Mandataire: **Fruchard, Guy et al
CABINET BOETTCHER 23, rue la Boétie
F-75008 Paris (FR)**

Courier Press, Leamington Spa, England.

EP 0 191 786 B1

**Description**

La présente invention concerne la fabrication des cartouches de filtres, du type de celles réalisées à partir d'une feuille de matière filtrante, constituée notamment en fibres de papier imprégnée de résine, pliée en accordéon sur la surface d'un cylindre et emboîtée, par ses bords latéraux externes, à l'intérieur de deux supports externes.

Dans les filtres connus de ce genre, les deux problèmes principaux qui se posent actuellement sont, sous un volume donné, et donc avec diamètre imposé:

—d'obtenir la surface effective filtrante maximale,

—et d'éviter que certains plis de l'accordéon ne soient en contact les uns avec les autres.

On comprend en effet aisément que, plus la surface filtrante est grande, moins les pertes de charges seront importantes à la traversée du filtre, et donc meilleur sera le débit et la qualité de la filtration.

Par contre, les deux contraintes ci-dessus paraissent, à priori, contradictoires. Car, plus la surface filtrante est grande, pour un diamètre donné, plus elle nécessite de plis à répartir sur le pourtour de la cartouche et plus les plis doivent être rapprochés les uns des autres.

Or, la face externe de la cartouche filtrante est l'objet de courant du fluide et de surpression. En sorte que, sur les cartouches de filtre classique, l'on constate habituellement que, si les plis de la feuille filtrante sont trop rapprochés, certains d'entre eux se regroupent et s'agglutinent, en paquets, alors que les autres s'écartent inutilement. Il en résulte que:

—d'une part, la surface efficace de filtration diminue,

—d'autre part, que les peu de plis de filtration qui restent écartés sur la cartouche sont en très petit nombre et se remplissant rapidement de salissures solides. La perte de charge augmente et la cartouche devient vite inutilisable.

Dans les cartouches les plus usuelles, les plis sont simplement tenus par leurs deux extrémités dans les deux supports extrêmes, qui forment les flancs de la cartouche.

L'espacement initial externe des plis est d'environ 0,8 mm.

Sur ces cartouches usuelles, le phénomène d'agglutinement s'établit très rapidement et est fortement prononcé.

La durée de vie de la cartouche est très faible, du fait de la quantité maximale de poussière qui peut être retenue dans le peu de plis restant efficaces.

Pour résoudre ce problème, l'art antérieur récent à tenté de mettre en place diverses méthodes pour:

—répartir uniformément les plis de la feuille filtrante sur la surface latérale de la cartouche,

—et imposer une distance minimale d'environ 1 millimètre entre les plis externes contigus de la cartouche.

Une première variante, actuellement mise en oeuvre, consiste, à certains niveaux de la cartouche, à écraser le pourtour supérieur de chaque pli, pour augmenter son encombrement latéral à cet endroit et obliger les plis à rester écartés. Mais cette méthode ne permet pas d'écarter suffisamment les plis les uns des autres. En sorte que cette méthode est inefficace.

Une seconde variante, dérivée de la première, consiste à déformer à chaud le papier, pour munir ses plis de nervures radiales acroissant également leur encombrement latéral et tendant à les écarter. Cette méthode permet initialement d'assurer une certaine homogénéité dans l'espacement des plis. Mais elle est d'une mise en oeuvre très difficile et nécessite l'utilisation d'une machine spécifique. Par ailleurs, les cartouches filtrantes, auxquelles elle aboutit, perdent très rapidement leur configuration mécanique concernant l'espacement des plis. En effet, les ambiances chaudes et chimiquement difficiles, dans lesquelles travaillent les cartouches, effacent les rainures qui avaient été ménagées à chaud sur les plis. En sorte que les cartouches de cette seconde variante retrouvent les défauts des cartouches usuelles décrites ci-dessous.

Enfin, selon une troisième variante de cartouche de filtre, on tente d'écarter uniformément les plis, les uns des autres, en les maintenant entre les spires successives de ressorts à boudins, refermés sur eux-mêmes et placés sur la face externe, à différents niveau et tout autour de la cartouche. Selon cette méthode, les plis restent libres en dehors des endroits où ils sont tenus par les spires des ressorts. En sorte qu'entre la position des ressorts, le phénomène d'agglutinement des plis tend à se reproduire. Il est nécessaire, pour maintenir leur écartement, de mettre en place un grand nombre de ressorts; ce qui complique considérablement la fabrication des cartouches.

Au surplus, l'inclinaison des spires des ressort tend à incliner les plis, vis-à-vis de l'axe de la cartouche, ce qui intensifie l'agglutinement des plis.

Enfin et surtout, les boudins des ressorts pincent, l'un contre l'autre, les deux flancs de chaque pli; en sorte que les flancs des plis tendent à se coller et à rendre totalement inefficace la cartouche filtrante en réduisant sa surface de filtration à celle très limitée des bords de chaque pli.

Le but de la présente invention est de résoudre globalement les problèmes ci-dessus.

Un premier but de l'invention est de proposer un nouveau node de réalisation de cartouches de filtre offrant une surface filtrante maximale et un espacement de plis répartis de façon homogène.

Un second but de l'invention est de proposer une cartouche de filtre présentant une durée de vie plus grande.

Enfin, un troisième but de l'invention est d'enseigner plusieurs solutions techniques de réalisation de cartouche de filtre dont les plis sont écartés et uniformément répartis.

L'invention constitue une amélioration du principe d'écartement des plis selon la troisième variante décrite ci-dessus.

A cet effet on prévoit selon l'invention un procédé de fabrication d'un filtre à partir d'une feuille de matière filtrante, constituée notamment en fibres de papier imprégnées de résine, le procédé, destiné à accroître l'efficacité et la pérennité du filtre, en accroissant et en répartissant la surface de filtration, consistant notamment:

—à modeler la feuille en un accordéon selon une série de plis parallèles à une même première direction dite de pliage, et de profondeur égale;

—à maintenir ledit accordéon parses bords latéraux, externes aux plis à l'intérieur de deux supports extrémés, de façon à constituer un filtre comportant une face externe par laquelle est destiné à rentrer le fluide à filtrer pour traverser la feuille, et une face interne par laquelle sort le fluide après avoir traversé la feuille;

—et à ménager un écartement minimal entre au moins certaines portions des plis externes contigus,

ledit procédé étant caractérisé en ce que, en combinaison:

. d'une part, on pince l'un contre l'autre au moins deux plis contigus de la face externe, à au moins deux niveaux de la hauteur de la feuille distants les uns des autres dans ladite première direction de pliage, les deux plis ménageant ainsi des portions intermédiaires, face à face, situées entre les deux points de pincement;

. d'autre part, on écarte les deux portions intermédiaires aux pincements des plis contigus externes de façon à ménager au moins un nid d'abeille sur la face externe du filtre entre les deux plis contigus.

L'invention concerne également une cartouche de filtre cylindrique comportant deux disques d'extrémité maintenant une feuille de matière filtrante pliée en accordéon avec des plis ayant une profondeur égale et une direction de pliage rectiligne parallèle à deux bords latéraux de la feuille joints l'un à l'autre, les plis étant maintenus généralement écartés les uns des autres, caractérisée en ce que chaque pli est lié à chacun de deux plis contigus situés de part et d'autre de celui-ci par des liaisons ponctuelles, l'un des plis contigus étant lié au pli considéré à une première série de niveaux et l'autre pli contigu étant relié au pli considéré à une seconde série de niveaux intercalaires à la première série de niveaux.

D'autres caractéristiques et avantages de l'invention ressortent de la description qui va suivre en regard des dessins annexés: lesquels descriptions et dessins ne sont données qu'à titre d'exemple non limitatif.

Sur ces dessins:

La figure 1 décrit en prespective les caractéristiques principales d'une cartouche filtrante selon l'invention;

La figure 2 représente un second mode de réalisation de la surface filtrante en nid d'abeilles par agrafage des plis,

La figure 3 représente un troisième mode de réalisation de la surface filtrante en nid d'abeilles par pinçage des plis,

La figure 4 représente un quatrième mode de réalisation de la surface filtrante en nid d'abeilles à l'aide d'une structure métallique intermédiaire.

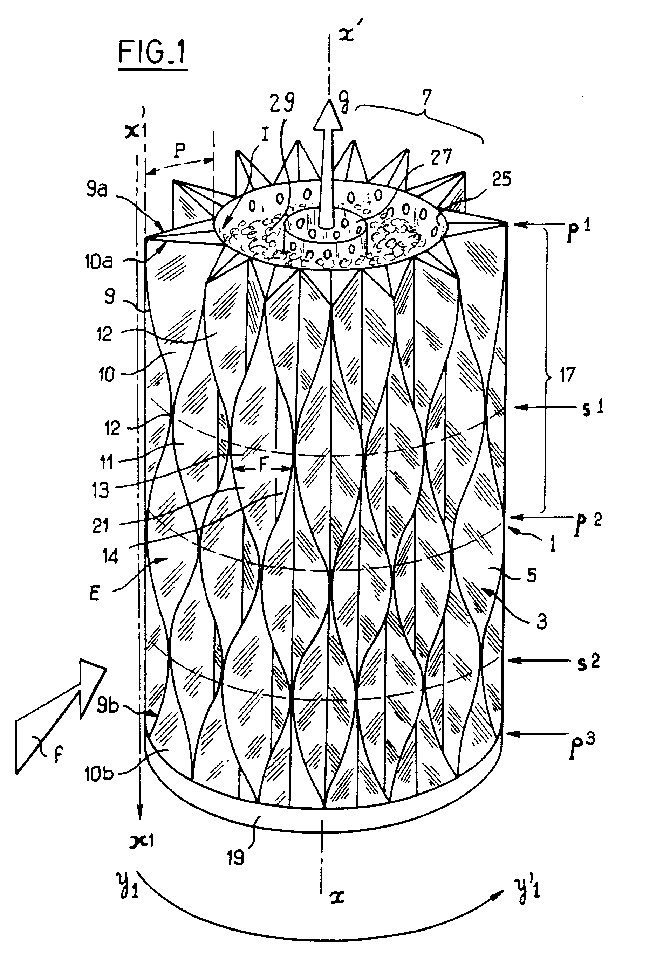

La cartouche filtrante 1, représentée figure 1 a une géométrie sensiblement cylindrique. Elle est constituée principalement par une feuille 3 de papier filtre 5. Le papier filtre 5 est imprégné de résine pour mieux résister aux contraintes thermiques, chimiques, mécaniques et de pression auxquelles il est soumis de la part du fluide qu'il traite.

La feuille 3 de papier 5 avait initialement une forme rectangulaire. Elle a, tout d'abord de manière classique, été pliée en un accordéon 7 selon une série de plis 9, 10, 11 ... parallèles à une première direction de pliage parallèle à l'axe x, x' de la cartouche.

La profondeur de chacun des plis 9, 10, 11, 12, 13, 14 est constante. Les deux bords longitudinaux (non distinguables sur la figure 1) de a feuille 1 ont été placés côte à côte pour que la feuille constitue un bloc de filtration 17 sensiblement cylindriques. Les bords latéraux 9a, 9b des plis 9, 10 ... de l'accordéon 7 sont maintenus par collage à l'intérieur de supports métalliques extremes, dont seulement le support inférieur 19 a été représenté, l'autre ayant été retiré pour montrer la partie supérieure de la cartouche 1. Le rôle des supports métalliques 19 est, d'une part, d'assurer la rigidité et la normalisation dimensionnelle des cartouches 1 et d'autre part, de donner une étanchéité entre la partie aval et la partie amont du réseau de filtration à l'intérieur duquel doit être placée la cartouche filtrante 1.

Le bloc de filtration 17 présente une surface extérieure E par laquelle est destiné à rentrer le fluide à traiter avant de traverser la feuille 3, et une surface intérieure 1 par laquelle sort le fluide après traitement. On a représenté par une flèche f, l'entrée du fluide sur la face externe E de pa cartouche de filtration.

Une des originalités essentielles de l'invention réside dans sa structure comportant une pluralité de nids d'abeilles 21, selon laquelle est configurée la surface externe E de la cartouche.

Pour parvenir à ce résultat, on procédé de la manière suivante:

—d'une part, selon une première partition $P1=(9, 10; 11, 12; ...)$ de couples de plis, on pince les plis 9, 10, 11, 12, 13, 14 de l'accordéon 7, à divers niveaux primaires $p1, p2, p3$ de la hauteur de la feuille 3 distants l'un de l'autre. Chaque paire 9, 10; 11, 12; ... de la première partition comporte deux plis contigus de l'accordéon 7.

—D'autre part, selon une seconde partition $P2=(10, 11; 12, 13; ...)$ de couples de plis, décalée d'un pli par rapport à la première, on pince également, deux par deux, les plis contigus 10, 11; 12, 13 appartenant à deux paires voisines de la première partition P1, ceci à divers niveaux secondaires $s1, S2$ ... situés chacun entre deux niveaux de pincement primaire, respectivement $p1, p2; p2, p3$.

Enfin, on exerce dans leur portion intermédiaire pi, une force d'écartement F entre les plis contigus 13, 14 de la première partition P1. On écarte ainsi les plis 13 et 14 en ménageant une pluralité de nids d'abeilles 21, disposés selon une seconde direction $Y_1$, $Y_1'$ perpendiculaire à la première direction x, x' de pliage.

Si la cartouche filtrante 1 avait eu un forme quasi plane, un moyen recommandé par l'invention pour exercer la force d'écartement F, aurait consisté à exercer une traction selon la direction y1, y'1 perpendiculaire à la direction de pliage x1, x'1 entre les bords longitudinaux de la feuille 3.

Mais pour la réalisation d'une cartouche de filtre cylindrique 3, les bords longitudinaux de l'accordéon 7 sont repliés sur eux-mêmes afin de définir un cylindre d'axe x, x'. Les contraintes que subissent les plis externes de l'accordéon, du fait de repliement cylindrique de la feuille et des plis 13, 14, engendrent les nids d'abeilles 21.

Une première grille métallique cylindrique (25, d'axe x, x' plaque vers l'extérieur, l'intérieur des plis de l'accordéon 7.

Cette disposition permet de compenser les efforts de pression transmis à la feuille 3 par le fluide extérieur, de rigidifier la cartouche et d'accroître le phénomène de traction sur les plis externes 9, 10, 11, 12, 13 ... aboutissant à un écartement des nids d'abeilles 21.

Ainsi réalisé, l'ensemble des plis 9, 10, 11, 12, 13 ... du bloc de filtration 17 constitue une structure parfaitement hyperstatique ne pouvant subir aucune déormation mécanique importante.

Une deuxième grille métallique cylindrique 27, coaxiale et de diamètre inférieur à a première, mais de hauteur égale à celle de la cartouche est placée au centre.

Les deux grilles 25 et 27 sont maintenues en place par les supports métalliques externes 19. Entre les deux grilles 25 et 27 est généralement enfermé un composé 29 de filtration complémentaire, constitué notamment d'un granulat de charbon actif d'argile.

La cartouche 1 peut traiter tous types de fluides, aussi bien liquides que gazeux.

Une des applications les plus avantageuses de l'invention concerne la régénération des solvants des bains de lavage pour machine à nettoyage à sec.

La méthode de régénération la plus ancienne dans ce domaine procèdè par distillation du solvant. Mais celle-ci est à la fois très pénible de mise en oeuvre et extrêmement coûteuse.

La demanderesse à développé de nombreuses améliorations aux techniques de régénération par filtres qui permettent de remplacer, en partie ou totalement, dans ce domaine, les méthodes par distillation. Cest techniques aboutissent à un plus grand confort d'utilisation et à un coût de revient très avantageux. Mais elles sont limitées par la durée de vie assez courte des cartouches du fait des phénomènes d'encrassement rapide évoqués plus haut.

La nouvelle cartouche de filtration, proposée par l'invention, résoud ces problèmes. Si l'on considère sont application à un fluide constituée par un bain de lavage, on aboutit au processus de filtration suivant.

Le liquide traverse sensiblement radialement, selon f la feuille 3. Il se partage en une pluralité de veines, uniformément réparties surle pourtour, qui s'engouffrent chacune dans un nid d'abeilles 21. Du fait de cette configuration en nids d'abeilles, les plis offrent chacun un volume intérieur et une surface efficace très grands. Les salissures insolubles, et notamment les poussières sont retenues par le papier 1 et se déposent uniformément à l'intérieur du nid d'abeilles 21.

Les salissures solubles ou très fines traversent la feuille 3 et la première grille 25, mais sont retenues à l'intérieur du composé de filtration 29. Le solvant régénéré et clair traverse la seconde grille 27 et s'échappe vers l'extérieur par le canal interne 31.

L'intérêt essentiel de l'invention réside dans le fait que les nids d'abeilles 21 assurent un écartement régulier des plis. En sorte que, d'une part, la surface de filtration est maximale, et d'autre part, le volume de poussière que les plis peuvent retenir est considérablement plus important qu'à l'intérieur des cartouches classiques.

Ces dispositions aboutissent à une durée de vie des cartouches de deux à trois fois plus grande et à des pertes de charge considérablement diminuées.

L'invention recommande également divers modes de réalisation des nids d'abeilles 21 sur la face externe E de la cartouche.

Une première variante, représentée figure 1, consiste à répartir entre les couples de plis 9, 10; 10, 11; 11, 12 et aux divers niveaux p1, p2, p3, s1, s2 des segments de colle entre les plis qui doivent être pincés. Puis on pince les plis aux niveaux adéquats.

Une seconde variante, proche de la première, consiste à utiliser les propriétés du papier 5, imprégné de résine polymérisable. Selon cette technique, on pince l'un contre l'autre des plis contigus aux niveaux adéquats et on les écrase à chaud, l'un contre l'autre, jusqu'à polymérisation de la résine.

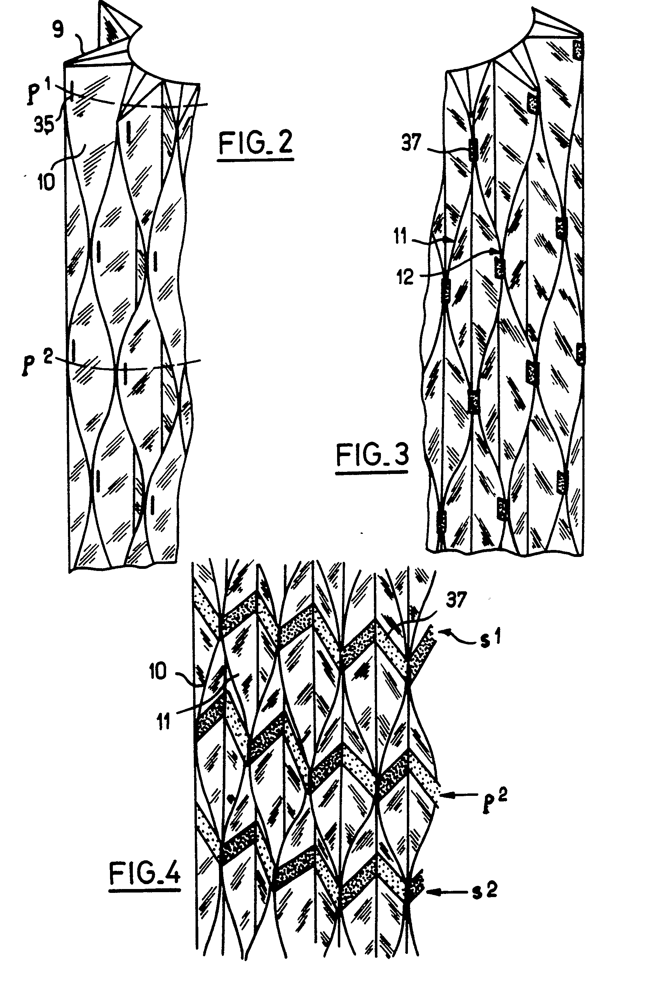

Une troisième variante, représentée figure 2, consiste à pincer, l'un contre l'autre, les plis contigus à l'aide d'agrafes 35 plantées entre les deux plis 9, 10, et qui les réunissent entre eux aux niveaux p1, p2 ... adéquats.

Une quatrième variante, représentée figure 3, consiste à remplacer les agrafes 35 par des pinces indépendantes 37 écrasant les plis 11, 12 à l'extérieur.

Enfin, une cinquième variante, représentée figure 5, consiste à répartir sur le pourtour de la cartouche et aux différents niveau ... s1, p2, s2 des éléments métalliques ondulés 37, pinçant les plis contigus 10,11 aux endroits où ils doivent l'être et les écartant dans les autres zones.

On comprendra aisément que la méthode de filtration, de l'invention, s'adapte aisément à la filtration de tout autr fluide et notamment à la filtration des eaux ou des poussières en suspension dans les gaz d'admission d'un moteur à combustion interne.

L'invention ayant maintenant été décrité, et son intérêt justifié sur un exemple détaillé, les demandeurs s'en réservent l'exclusivité pendant toute la durée du brevet, sans limitation autre que celle des revendications ci-après.

**Revendications**

1. Procédé de fabrication d'un filtre (1) à partir d'une feuille (3) de matière filtrante (5), constituée notamment en fibres de papier imprégnées de résine, le procédé, destiné à accroître l'efficacité et la pérennité du filtre (1), en accroissant et en répartissant la surface de filtration, consistant notamment:

—à modeler la feuille (3) en un accordéon (7) selon une série de plis (9, 10, 11, 12, 13, etc ...), parallèles à une même première direction (x1, x'1) dite de pliage, et de profondeur égale;

—à maintenir ledit accordéon (7) par ses bords latéraux, externes aux plis (9, 10, 11, 12, 13 ...) à l'intérieur de deux supports extrêmes, de façon à constituer un filtre (1) comportant une face externe (E) par laquelle est destiné à rentrer (selon f), le fluide à filtrer pour traverser la feuille (3), et une face interne (1) par laquelle sort le fluide après avoir traversé la feuille (3);

—et à ménager un écartement minimal entre au moins certaines portions des plis externes (9, 10, 11, 12, 13 ...) contigus,
ledit procédé étant caractérisé en ce que, en combinaison:

. d'une part, on pince l'un contre l'autre au moins deux plis contigus (9, 10) (11, 12), (13, 14) de la face externe, à au moins deux niveaux (p1, p2, p3) de la hauteur de la feuille (3) distants les uns des autres dans ladite première direction de pliage (x1, x'1), les deux plis ménageant (13, 14) ainsi des portions intermédiaires, face à face, situées entre les deux points de pincement;

. d'autre part, on écarte les deux portions intermédiaires aux pincements des plis contigus externes (13, 14) de façon à ménager au moins un nid d'abeille (21) sur la face externe (E) du filtre (1) entre les deux plis contigus (13, 14).

2. Procédé selon la revendication 1 précédente, de réalisation d'un filtre (1) à partir d'une feuille (3) de matière filtrante (5) pliée en accordéon (7), ledit procédé, destiné à créer une pluralité de nids d'abeille (21) sur la surface (E) du filtre (1) étant caractérisé, en combinaison, en ce que:

. d'une part, selon une première partition (P1) de couple (9, 10), (11, 12), (13, 14), on pince deux par deux et à au moins deux niveaux primaires (p1, p2, p3) de la hauteur de la feuille (3), distants l'un de l'autre, des plis contigus (9, 10) de la face externe (E) de l'accordéon (7),

. d'autre part, selon une seconde partition (P2) décalée d'un pli par rapport à la première (P1) on pince, deux par deux, les plis contigus (10, 11) appartenant à deux paires voisines de la première partition, à un niveau secondaire (s1, s2) situé dans la portion intermédiaire entre les deux dits niveaux (p1, p2) de pincement primaire.

. enfin, on exerce, au moins dans leur portion intermédiaire, une force d'écartement (F) entre les plis contigus (13, 14) de la première partition (P1), de façon à ménager, sur la face externe du filtre, et dans les parties intermédiaires, une pluralité de nids d'abeille (21) répartis selon une seconde direction (y1, y'1) perpendiculaire à la première direction (X1, X'1) de pliage.

3. Procédé selon la revendication 2 précédente, de réalisation d'un filtre (1) à partir d'une feuille (3) de matière filtrante (5) pliée en accordéon (7), ledit procédé étant caractérisé en ce que l'on ouvre les nids d'abeilles (21), en maintenant une traction (F) perpendiculaire à la première direction de pliage (x1,x'1) entre les bords longitudinaux de la feuille parallèles à la première direction de pliage.

4. Procédé selon la revendication 3 précédente, de réalisation d'une cartouche (1) de filtre cylindrique, en nid d'abeille (21), à partir d'une feuille (3) de matière filtrante (5) pliée en accordéon, ledit procédé étant caractérisé en ce que l'on exerce la traction (F) d'ouverture des nids d'abeille (21), en repliant sur lui-même ledit accordéon (7) selon un cylindre d'axe (x1, x'1) parallèle à ladite première direction (x1, x'1) de pliage.

5. Procédé selon l'une des revendications 1 à 4 précédentes, de réalisation d'un filtre (1) à partir d'une feuille (3) de matière filtrante (5), ledit procédé étant caractérisé en ce que l'on pince l'un contre l'autre les plis contigus (11, 12) en les écrasant à l'aide de pinces indépendantes (37).

6. Procédé selon l'une des revendications 1 à 4 précédentes, de realisation d'une filtre (1) à partir d'une feuille (3) de matière filtrante (5), ledit procédé étant caractérisé en ce que l'on pince l'un contre l'autre les plis contigus (9, 10) à l'aide dagrafes (35) plantées entre les deux plis contigus (9, 10).

7. Procédé selon l'une des revendications 1 à 4 précédentes, de réalisation d'un filtre (1) à partir d'une feuille (3) de matière filtrante (5), ledit procédé étant caractérisé en ce que l'on pince l'un contre l'autre les plis contigus (9, 10) en plaçant entre eux un point de collage.

8. Procédé selon la revendication 7 précédente, de réalisation d'un filtre (1) à partir d'une feuille (3) de matière filtrante (5) imprégnée de résine polymérisable, ledit procédé étant caractérisé en ce que l'on pince l'un contre l'autre les plis contigus (9, 10) et on les écrase à chaud, l'un contre l'autre jusqu'à polymérisation de la résine.

9. Cartouche de filtre cylindrique comportant deux disques d'extrémité maintenant une feuille (3) de matière filtrante pliée en accordéon avec des plis (9, 10, 11, 12, 13, 14 ...) ayant une profondeur égale et une direction de pliage (x1, x'1) rectiligne parallèle à deux bords latéraux de la feuille joints l'un à l'autre, les plis étant maintenus généralement écartés les uns des autres, caractérisée en ce que chaque pli est lié à chacun de deux pis contigus situés de part et d'autre de celui-ci par des liaisons ponctuelles (35, 37), l'un des plis contigus étant lié au pli considéré à une première série de niveaux (p1, p2, p3 ...) et l'autre pli contigu étant relié au pli considéré à une seconde série de niveaux (s1, s2 ...) intercalaires à la première série de niveaux.

10. Cartouche de filtre selon la revendication 9, caractérisée en ce que les liaisons ponctuelles sont constituées par des segments de colle.

11. Cartouche de filtre selon la revendication 9, caractérisée en ce que les liaisons ponctuelles sont constituées par des agrafes.

12. Cartouche de filtre selon la revendication 9, caractérisée en ce que les liaisons ponctuelles sont constituées par une résine polymérisée dont la feuille de matière filtrante est imbibée.

**Patentansprüche**

1. Verfahren zur Herstellung eines Filters (1) aus einem Blatt (3) eines Filtermaterials (5), das insbesondere aus mit Harz imprägnierten Papierfasern besteht, wobei das Verfahren zur Steigerung der Wirksamkeit und der Lebensdauer des Filters (1) unter Vergrößerung und Verteilung der Filterfläche insbesondere folgende Schritte umfaßt:

Falten des Blattes (3) nach Art einer Ziehharmonika (7) mit einer Reihe von Falten (9, 10, 11, 12, 13, etc ...), die parallel zu einer selben ersten Faltrichtung (x1, x'1) gerichtet sind und gleiche Breite haben;

Festhalten der Ziehharmonika (7) an ihren Seitenrändern außerhalb der Falten (9, 10, 11, 12, 13 ...) innerhalb zweier Endträger, um so einen Filter (1) zu bilden mit einer Außenfläche (E) durch die das zu filternde Fluid (in Richtung f), eindringen soll, um das Blatt (3) zu durchsetzen, und mit einer Innenfläche (I) durch die das Fluid nach dem Durchqueren des Blattes (3) austritt; und

Herstellen eines Minimalabstandes zwischen mindestens bestimmten Abschnitten der äußeren benachbarten Falten (9, 10, 11, 12, 13 ...), wobei das Verfahren gekennzeichnet ist durch die Kombination der Schritte:

zum einen klemmt man mindestens zwei benachbarte Falten (9, 10), (11, 12), (13, 14) der Außenfläche gegeneinander auf mindestens zwei in der ersten Faltrichtung (x1, x'1) voneinander beabstandeten Höheneben (p1, p2, p3) des Blattes (3), wobei die beiden Falten (13, 14) auf diese Weise zwischen den beiden Klemmpunkten sich gegenüberliegende Mittelabschnitte bilden;

zu anderen spreizt man die beiden Mittelabschnitte zwischen den Klemmstellen der benachbarten äußeren Falten (13, 14), um mindestens eine Wabenöffnung an der Außenfläche (E) des Filters (1) zwischen den zwei benachbarten Falten (13, 14) zu schaffen.

2. Verfahren nach dem vorhergehenden Anspruch 1 zur Herstellung eines Filters (1) aus einem zu einer Ziehharmonika (7) gefalteten Blatt (3) eines Filtermaterials (5), wobei das Verfahren zur Schaffung einer Mehrzahl von Wabenöffnungen (21) an der Oberfläche (E) des Filters (1) durch die Kombination der folgenden Schritte gekennzeichnet ist:

zum einen klemmt man nach einer ersten Verteilung (P1) von Paaren (9, 10), (11, 12), (13, 14) die benachbarten Falten (9, 10) der Außenfläche (e) der Ziehharmonika (7) auf mindestens zwei ersten Höhenniveaus (p1, p2, p3) des Blattes (3) zwei und zwei zusammen,

zum anderen klemmt man nach einer gegenüber der ersten (P1) um eine Falte versetzten zweiten Paaraufteilung (P2) die benachbarten Falten (10, 11), die zu zwei Nachbarpaaren der ersten Verteilung gehören, zwei und zwei auf einem zweiten Höhenniveau zusammen, das in dem mittleren Abschnitt zwischen den beiden ersten Klemmniveaus (p1, p2) liegt,

schließlich übt man zumindest in ihrem Zwischenabschnitt eine Spreizkraft (F) auf die beiden benachbarten Falten (13, 14) der ersten Verteilung (P1) auf, um so an der Außenfläche des Filters in den Mittelabschnitten eine Vielzahl von Wabenöffnungen (21) zu schaffen, die entlang einer zweiten Richtung (y1, y'1) verteilt sind, die zur ersten Faltrichtung (x1, x'1) senkrecht gerichtet ist.

3. Verfahren nach dem vorhergehenden Anspruch 2 zur Herstellung eines Filters 1 aus einem zu einer Ziehharmonika (7) gefalteten Blatt (3) aus Filtermaterial (5), wobei das Verfahren dadurch gekennzeichnet ist, daß man die Wabenöffnungen (21) öffnet unter Ausübung einer zur ersten Faltrichtung (x1, x'1) senkrechten Zugkraft (F) zwischen den zur ersten Faltrichtung parallelen Längsrändern des Blattes.

4. Verfahren nach dem vorhergehenden Anspruch 3 zur Herstellung einer zylindrischen Filterkartusche (1) mit Wabenstruktur aus einem ziehharmonikaartig gefalteten Blatt (3) aus Filtermaterial (5), wobei das Verfahren dadurch gekennzeichnet ist, daß man die Zugkraft (F) zur Öffnung der Wabenöffnungen (21) ausübt, indem man die Ziehharmonika um eine zur ersten Faltrichtung (x1, x'1) parallele Zylinderachse (x1, x'1) um sich selbst faltet.

5. Verfahren nach einem der vorhergehenden Ansprüche 1 bis 4 zur Herstellung eines Filters (1) aus einem Blatt (3) eines Filtermaterials (5), wobei das Verfahren dadurch gekennzeichnet ist, daß man die benachbarten Falten (11, 12) gegeneinander klemmt, indem man sie mit Hilfe unabhängiger Klammern (37) zusammendrückt.

6. Verfahren nach einem der vorhergehenden Ansprüche 1 bis 4 zur Herstellung eines Filters (1) aus einem Blatt (3) eines Filtermaterials (5), wobei das Verfahren dadurch gekknnzeichnet, ist, daß man die benachbarten Falten (9, 10) mit Hilfe von Heftklammern (35) zusammenheftet, welche zwischen die beiden benachbarten Falten (9, 10) gesetzt werden.

7. Verfahren nach einem der vorhergehenden Ansprüche 1 bis 7 zur Herstellung eines Filters (1) aus einem Blatt (3) eines Filtermaterials (5), wobei das Verfahren dadurch gekennzeichnet ist, daß man die benachbarten Falten (9, 10) durch Anordnung eines Klebepunktes zwischen ihnen zusammenklemmt.

8. Verfahren nach dem vorhergehenden Anspruch 7 zur Herstellung eines Filters (1) aus einem Blatte (3) eines mit einem polymerisierbaren Harz imprägnierten Filtermaterials (5), wobei das Verfahren dadurch gekennzeichnet ist, daß man die benachbarten Falten (9, 10) zusammenklemmt und sie unter Wärmezufuhr zusammenquetscht bis zur Polymerisation des Harzes.

9. Zylindrische Filterkartusche mit zwei Endscheiben, welche ein ziehharmonikaartig gefaltetes Blatt (3) eines Filtermaterials mit Falten (9, 10, 11, 12, 13, 14 ...) zwischen sich halten, welche eine gleiche Breite und eine gerade Faltrichtung (x1, x'1) haben, die parallel zu zwei miteinander zusammen[ßhängenden Seitenrändern des Blattes ist, wobei die Falten in einem Abstand voneinander gehalten sind, dadurch gekennzeichnet, daß jede Falte mit jeder der beiderseits von ihr liegenden benachbarten Falte durch Punktverbindungen (35, 37) verbunden ist, wobei die eine der benachbarten Falten mit der betrachteten Falte auf einer erste Reihe von Niveaus (p1, p2, p3 ...) verbunden ist und die andere benachbarte Falte mit der betrachteten Falte auf einer zweiten Reihe von Niveaus (s1, s2 ...) verbunden ist, die in den Zwischenräumen der ersten Reihe von Niveaus liegen.

10. Filterkartusche nach Anspruch 9, dadurch gekennzeichnet, daß die Punktverbindungen von Klebstoffabschnitten gebildet sind.

11. Filterkartusche nach Anspruch 9, dudurch gekennzeichnet, daß die Punktverbindungen durch Heftklammern hergestellt sind.

12. Filterkartusche nach Anspruch 9, dadurch gekennzeichnet, daß die Punktverbindungen durch ein polymerisiertes Harz hergestellt sind, mit dem das Blatt aus Filtermaterial getränkt ist.

## Claims

1. A method of manufacturing a filter (1) from a sheet (3) of filter material (5), the filter material being constituted, in particular, of resin-impregnated paper fibers, the method for increasing the efficiency and the lifetime of the filter (1) by increasing and spreading the filtering area consists, in particular:

in shaping the sheet (3) into a concertina (7) configuration by means of a series of folds (9, 10, 11, 12, 13, etc. ...) parallel to a first "folding" direction (x1, x'1), with the folds being of equal depth;

in holding said concertina (7) by its side edges external to the folds (9, 10, 11, 12, 13, ...) inside two end supports, thereby constituting a filter (1) having an outside face (E) via which the fluid to be filtered is intended to enter (along f), in order to pass through the sheet (3), and an inside face (I) via which the fluid leaves after it has passed through the sheet (3); and

in providing a minimum gap between at least some portions of contiguous outside folds (9, 10, 11, 12, 13, ...);

said method being characterized by the following, in combination:

firstly at least two contiguous folds (9, 10), (11, 12), (13, 14) of the outside face are clamped against each other at at least two levels (p1, p2, p3) at different heights up the sheet (3) separated from each other in said first fold direction (x1, x'1), with the two folds (13, 14) thus providing facing intermediate portions situated between the two clamping points; and

secondly, the two intermediate portions between the clamping points in the continuous external folds (13, 14) are splayed apart so as to provide at least one honeycomb cell (21) on the outside face (E) of the filter (1) between the two contiguous folds (13, 14).

2. A method according to above claim 1 of making a filter (1) from a sheet (3) of filter material (5) which is folded into a concertina (7), said method, designed to create a plurality of honeycomb cells (21) on the surface (E) of the filter (1) being characterized by the following, in combination:

firstly, contiguous folds (9, 10) of the outside face (E) of the concertina (7) are clamped together in pairs in a first distribution (p1) of pa/rs (9, 10), (11, 12), (13, 14), and at at least two spaced-apart primary levels (p1, p2, p3);

secondly, contiguous folds (10, 11) belonging to two adjacent pairs of the first distribution are clamped together in a second distribution (p2) which is offset from the first distribution (p1) by one fold, the clamping being at secondary levels (s1, s2) situated in the intermediate portions between pairs of said levels (p1, p2) of the primary clamping; and

finally, a splaying apart force (F) is exerted between contiguous folds (13, 14) of the first distribution (p1), at least in the intermediate portions thereof, thereby forming a plurality of honeycomb cells (21) on the outside face of the filter in the intermediate portions thereof and distributed in a second direction (y1, y'1) which is perpendicular to the first folding direction (x1, x'1).

3. A method according to above claim 2, of making a filter (1) from a sheet (3) of filter material (5) folded into a concertina (7), said method being characterized in that the honeycomb cells (21) are opened by maintaining traction (F) perpendicular to the first folding direction (x1, x'1) between the longitudinal edges of the sheet parallel to the first folding direction.

4. A method according to above claim 3, of making a cylindrical filter cartridge (1) having a honeycomb configuration (21) and using a sheet (3) fo concertina-folded filter material (5), said method being characterized in that the honeycomb cell opening traction (F) is exerted by folding said concertina (7) cylindrically back on itself about an axis (x1, x'1) parallel to said first folding direction (x1, x'1).

5. A method according to any one of above claims 1 to 4, of making a filter (1) from a sheet (3) of filter material (5), said method being characterized in that contiguous folds (11, 12) are clamped against each other by crushing them with independent clamps (37).

6. A method according to any one above claims 1 to 4, of making a filter (1) from a sheet (3) of filter material (5), said method being characterized in that contiguous folds (9, 10) are clamped against one another by means of staples (35) engaged in two contiguous folds (9, 10).

7. A method according to any one of above claims 1 to 4, of making a filter (1) from a sheet (3) of filter material (5), said method being characterized in that contiguous folds (9, 10) are clamped against one another by placing spots of glue between them.

8. A method according to above claim 7 of making a filter (1) from a sheet (3) of filter material (5) impregnated with a polymerizable resin, said method being characterized in that contiguous folds (9, 10) are clamped against each other and crushed against each other while hot until the resin polymerizes.

9. A cylindrical filter cartridge comprising end disks holding a sheet (3) of concertina-folded filter material having folds (9, 10, 11, 12, 13, 14, ...) of equal depth having a rectilinear folding direction (x1, x'1) parallel to two interconnected side edges of the sheet, the folds being held generally spaced apart from one another, the cartridge being characterized in that each fold is connected to each of the two contiguous folds situated on either side thereof by point connections (35, 37), with one of the contiguous folds being connected to a fold under consideration at a first series of levels (p1, p2, p3, ...) and with the other contiguous fold being connectd to the fold under consideration at a second series of levels (s1, s2, ...) interposed between the first series of levels.

10. A filter cartridge according to claim 9, characterized in that the point connections are constituted by segments of glue.

11. A filter cartridge according to claim 9, characterized in that the point connections are constituted by staples.

12. A filter cartridge according to claim 9, characterized in that the point connections are constituted by a polymerizable resin in which said sheet of filter material is soaked.

FIG.1

FIG. 2

FIG. 3

FIG. 4